# EUROPÄISCHE PATENTSCHRIFT

(11) **EP 0 694 138 B1**
(45) Veröffentlichungstag und Bekanntmachung des Hinweises auf die Patenterteilung: **25.06.1997**
(21) Anmeldenummer: 94914393.7
(22) Anmeldetag: 18.04.1994
(51) Int. Cl.: F16H 61/02, F16H 59/52

(54) **VERFAHREN ZUR STEUERUNG EINES AUTOMATISCHEN SCHALTGETRIEBES**
PROCESS FOR CONTROLLING AN AUTOMATIC GEARBOX
PROCEDE DE COMMANDE D'UNE BOITE DE VITESSES AUTOMATIQUE

(30) Priorität: 20.04.1993 DE 4312717
(43) Veröffentlichungstag der Anmeldung: 31.01.1996
(73) Patentinhaber: ZF FRIEDRICHSHAFEN Aktiengesellschaft, 88038 Friedrichshafen (DE)
(72) Erfinder: GRUHLE, Wolf-Dieter, D-88069 Tettnang (DE); ESCHER, Manfred, D-88045 Friedrichshafen (DE); JAUCH, Friedemann, D-88074 Meckenbeuren (DE); REITER, Friedrich, D-88079 Kressbronn (DE); WENDEL, Peter, D-88079 Kressbronn (DE)
(86) Internationale Anmeldenummer: EP9401189
(87) Internationale Veröffentlichungsnummer: WO9424464

(56) Entgegenhaltungen:
- EP-A- 0 120 191
- EP-A- 0 339 462
- EP-A- 0 391 387
- EP-A- 0 503 945
- EP-A- 0 512 596
- DE-A- 3 314 800
- DE-A- 3 811 541
- DE-A- 3 922 051
- DE-A- 4 006 451
- DE-A- 4 209 150
- GB-A- 1 431 186
- GB-A- 2 200 957
- US-A- 4 584 906
- ATZ AUTOMOBILTECHNISCHE ZEITSCHRIFT, Bd.94, Nr.9, September 1992, STUTTGART DE Seiten 428 - 438 WELTER ET AL 'Die Adaptive Getriebesteuerung für die Automatikgetriebe der BMW Fahrzeuge mit Zwölfzylindermotor'
- PATENT ABSTRACTS OF JAPAN vol. 13, no. 567 (M-908) 15. Dezember 1989 & JP,A,01 238 748 (MITSUBISHI ELECTRIC CORP) 22. September 1989

## Beschreibung

Die Erfindung betrifft ein Verfahren zur Steuerung eines automatischen Schaltgetriebes nach dem Oberbegriff des ersten bzw. vierten Anspruchs.

Bei einem automatischen Schaltgetriebe wird eine Schaltung ausgelöst, wenn eine Schaltkennlinie überschritten wird. Die Schaltkennlinien sind z. B. eine Funktion einer Fahrzeuggeschwindigkeit und einer Stellung der Drosselklappe. Üblicherweise kann der Fahrer aus drei Schaltprogrammen auswählen, z. B. durch Tastendruck.

Aus der DE 39 22 051 A1 ein Verfahren zur Steuerung eines automatischen Schaltgetriebes bekannt, bei dem aus den aktuellen Fahrzeug-Parametern eine erste Kenngröße, die Fahraktivität, bestimmt wird. Die aktuellen Fahrzeug-Parameter sind: eine Motordrehzahl, eine Drosselklappenstellung, eine Querbeschleunigung, eine Fahrzeuggeschwindigkeit und, hieraus abgeleitet, die Längs-Beschleunigung bzw. Längs-Verzögerung. Die Fahraktivität wählt aus fünf Schaltprogrammen eines aus.

Aus der EP-A-0 391 387 ist ein Verfahren bekannt, bei dem aus verschiedenen Fahr-Parametern, Gaspedalaktivität, Beschleunigung und Schaltaktivität, eine erste Kenngröße für das Verhalten des Fahrers und eine zweite Kenngröße für den Stadtbetrieb ermittelt wird.

Ausgehend vom zuvor beschriebenen Stand der Technik hat die Erfindung zur Aufgabe, diesen weiterzuentwickeln.

Eine erste Lösung der Aufgabe besteht darin, daß eine erste Kenngröße, die Fahraktivität, und eine zweite Kenngröße miteinander verknüpft werden, um ein Schaltprogramm aus einer Mehrzahl von möglichen Schaltprogrammen auszuwählen, wobei der Fahrzustand Stadtverkehr gesetzt wird, sobald eine Summe einen ersten Grenzwert überschreitet. Die Summe wird hierbei aus der Zahl der Anfahrvorgänge, Bremsvorgänge und Lastwechsel bestimmt, wobei die Summe periodisch durch Subtraktion eines festen Betrages bis zu einer minimalen Untergrenze von Null verringert wird. Alternativ hierzu kann die Summe durch Multiplikation mit einem Faktor < 1 ebenfalls verringert werden.

In einer Ausgestaltung hierzu wird vorgeschlagen, daß der Fahrzustand Stadtverkehr zurückgesetzt wird, sobald die Summe einen zweiten Grenzwert unterschreitet.

In einer weiteren Ausgestaltung wird vorgeschlagen, daß die Summierung nur unterhalb einer allgemein gesetzlichen Geschwindigkeitsbegrenzung innerhalb geschlossener Ortschaften erfolgt.

Die erste erfindungsgemäße Lösung und deren Ausgestaltung bieten den Vorteil, daß der Verbrauch optimiert werden kann, da im Stadtverkehr bei leistungsstarken Motoren nicht immer die volle Motorleistung erforderlich ist. Eine Optimierung des Verbrauchs kann z. B. dadurch erzielt werden, daß das Fahrzeug im 2. Gang anfährt. Hierdurch wird ebenfalls die Kriechneigung verringert. Eine zusätzliche Maßnahme zur Verbrauchsminderung ist eine Zylinderabschaltung.

Die zweite Kenngröße K2 wird aus den Fahrzuständen Stadtverkehr, Bergfahrt und Hängerbetrieb über eine Bewertungstabelle bestimmt. Beim gleichzeitigen Auftreten zweier Fahrzustände wird einer priorisiert. So wird z. B. bei Stadtverkehr gleichzeitig mit Hängerbetrieb der Fahrzustand Hängerbetrieb als zweite Kenngröße gesetzt.

Eine zweite Lösung der Aufgabe besteht gemäß Anspruch 4 darin, daß zur Unterscheidung der Fahrzustände Bergfahrt und Hängerbetrieb zwei Bereiche vorgesehen sind. Gemäß Anspruch 5 wird die Untergrenze des ersten Bereichs durch das Fahrzeug-Leergewicht und die Obergrenze durch das zulässige Gesamtgewicht des Fahrzeugs plus maximal zulässige Anhängelast gebildet.
Gemäß Anspruch 6 wird die Untergrenze des zweiten Bereichs durch eine Steigung von Null oder nahezu Null Prozent gebildet und die Obergrenze durch die maximal mögliche Steigleistung des Fahrzeugs.
Die zweite Lösung und deren Ausgestaltung bieten den Vorteil, daß nicht nur erhöhter Fahrwiderstand erkannt, sondern erhöhter Fahrwiderstand zusätzlich in Bergfahrt und/ oder Hängerbetrieb unterschieden wird. Hierdurch kann man durch unterschiedliche Schaltprogramme gezielter reagieren. Bei Bergfahrt schaltet das Getriebe in die nächsthöhere Gangstufe bei höheren Fahrzeuggeschwindigkeiten. Dadurch werden bei kleinen Laststellungen Pendelschaltungen verhindert. Eine Pendelschaltung tritt dann auf, wenn bei konstanter Laststellung die Zugkraft des Motors nach einer Hochschaltung geringer ist als die Summe der Fahrwiderstandskräfte. Das Fahrzeug beschleunigt nicht mehr, die Fahrzeuggeschwindigkeit sinkt.
Diese sinkt so lange, bis eine Schaltkennlinie für eine Rückschaltung überschritten wird. Das Getriebe schaltet in die nächstniedere Gangstufe. Da die Zugkraft in dieser Gangstufe größer ist als die Fahrwiderstandskräfte, beschleunigt das Fahrzeug wieder. Es beschleunigt so lange, bis erneut die Schaltkennlinie für die Hochschaltung überschritten wird. Dieses Pendeln zwischen den Gängen wird als unangenehm empfunden.
Beim Hängerbetrieb wird die Hysterese zwischen den Hochschalt- und Rückschaltkennlinien vergrößert. Von Vorteil hierbei ist, daß zum einen sich dadurch das Beschleunigungsverhalten verbessert und zum anderen sich die Schiebewirkung des Hängers nach der Schaltung in eine niedere Gangstufe verringert.

In der Zeichnung ist ein Ausführungsbeispiel des Steuerungsverfahrens dargestellt. Es zeigen:
- Fig. 1: ein Systemschaubild eines automatischen Schaltgetriebes;
- Fig. 2: ein Blockschaltbild zur Auswahl eines Schaltkennfeldes;
- Fig. 3: ein Diagramm zur Ermittlung der Fahrzustände Hänger und/oder Bergfahrt;
- Fig. 4: eine Bewertungstabelle und
- Fig. 5: ein Schaltkennfeld.

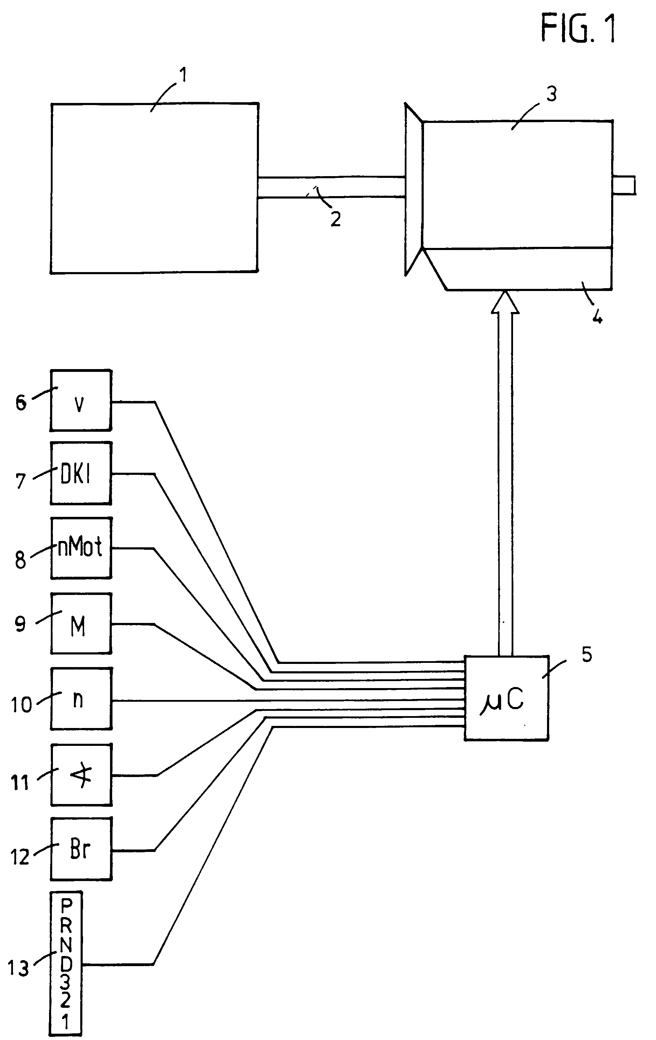

Fig. 1 zeigt ein automatisches Schaltgetriebe 3, das mit einem Motor 1 durch eine Antriebswelle 2 verbunden ist. Das automatische Schaltgetriebe 3 enthält nicht dargestellte Kupplungen, die durch nicht dargestellte, elektromagnetische Ventile betätigt werden, welche in einem hydraulischen Steuergerät 4 enthalten sind. Ebenfalls in dem hydraulischen Steuergerät 4 befinden sich nicht dargestellte elektromagnetische Druckregler. Die elektromagnetischen Ventile und elektromagnetischen Druckregler werden von einem elektronischen Steuergerät 5 angesteuert. Das elektronische Steuergerät 5 enthält die üblichen Bestandteile eines Mikroprozessor-Systems, wie Eingabe- und Ausgabeteil, Arbeitsspeicher und Recheneinheit.
Eingangsgrößen für das elektronische Steuergerät 5 sind eine Fahrzeuggeschwindigkeit 6, ein Drosselklappensignal 7, eine Motordrehzahl 8, ein Motormoment 9 oder ein Signal, aus dem das Motormoment berechnet werden kann, z. B. die Einspritzzeit, vier Raddrehzahlen 10, ein Lenkwinkel 11, ein Signal von einem Bremslichtschalter oder Bremsdruckschalter 12, das Signal von einem Fahrpositionsschalter 13 und das Signal eines nicht dargestellten Kick-down-Schalters.

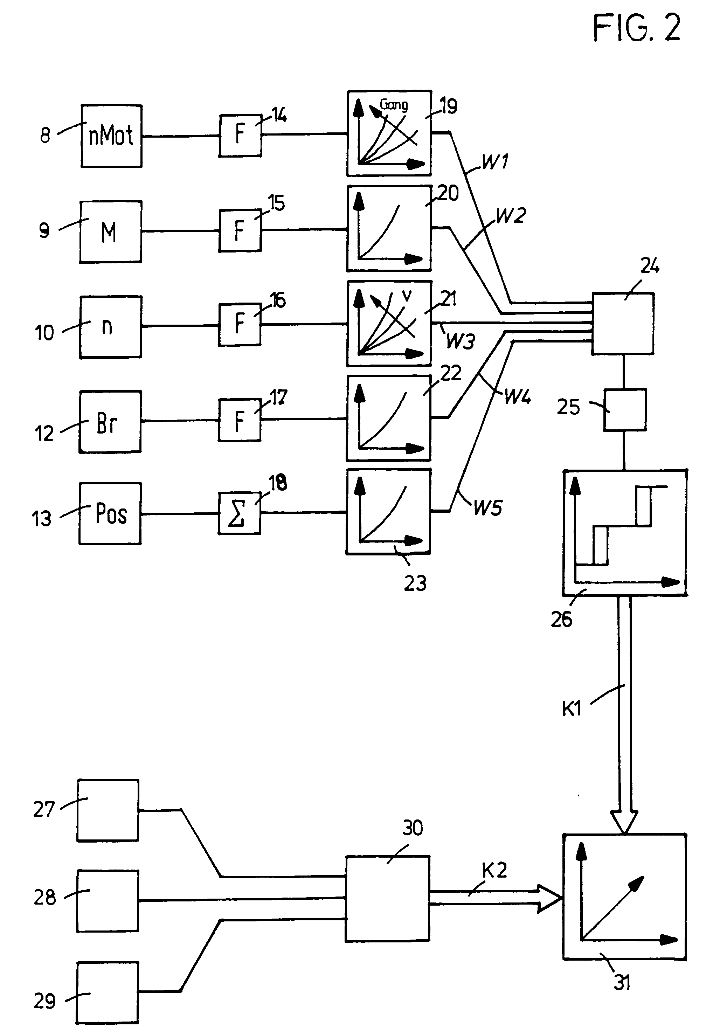

In Fig. 2 ist ein Blockschaltbild zur Auswahl eines Schaltkennfeldes 31 dargestellt. Das Schaltkennfeld 31 wird durch die beiden Kenngrößen K1, die Fahraktivität, und die zweite Kenngröße K2, den Fahrzustand, ausgewählt. Eingangssignale für die Kenngröße K1 sind eine Motordrehzahl 8, ein Motormoment 9, vier Raddrehzahlen 10, das Signal von einem Bremslichtschalter 12 oder Bremsdruckschalter und das Signal von einem Fahrpositionsschalter 13. Die Motordrehzahl 8 wird digital gefiltert 14. Die gefilterte Motordrehzahl wird über ein Kennfeld 19 gangabhängig gewichtet und in einen ersten Wert W1 gewandelt. Das Motoroment 9 wird digital gefiltert 15 und daraus über ein Kennfeld 20 ein zweiter, gewichteter Wert W2 bestimmt. Aus den vier Raddrehzahlen 10 wird durch Differenzbildung ein Kurvenradius berechnet. Der Kurvenradius kann ebenfalls berechnet werden aus einem Lenkwinkel 11. Der Kurvenradius wird digital gefilter 16 und über ein Kennfeld 21 gewichtet und in einen dritten Wert W3 gewandelt. Das Bremslicht- oder Bremsdrucksignal 12 wird zu einer Zeitmessung, der Bremsaktivität, verwendet. Die Zeitmessung beginnt mit einem Beschleunigungswechsel des Fahrzeugs von Zug nach Schub.
Sie endet, wenn der Fahrer die Bremse betätigt und das Bremslichtsignal gesetzt wird oder der Bremsdruck einen Sollwert überschreitet.
Die Bremsaktivität wird digital gefiltert 17. Die Ausgangsgröße des digitalen Filters 17 wird über ein Kennfeld 22 gewichtet und in einen vierten Wert W4 gewandelt. Das Signal eines Fahrpositionsschalters 13 wird einem Summierer 18 zugeführt. Im Summierer 18 wird die Anzahl der Fahrpositionsänderungen addiert. Der Zählerinhalt wird mit einem festen Zeittakt verringert, z. B. indem ein fester Betrag subtrahiert wird oder indem der Zählerinhalt mit einem Faktor < 1 multipliziert wird. Der Zählerstand wird über ein Kennfeld 23 gewichtet und in einen Wert W5 gewandelt.
Der Betrag der Werte W1 bis W5 liegt zwischen 0 und 1. Aus den Werten W1 bis W5 wird im Funktionsblock 24 der Maximalwert ausgewählt und anschließend gefiltert 25. Ausgangsgröße des Filters 25 ist ein Wert zwischen 0 und 1. Über die Kennlinie 26 wird diesen Werten eine erste Kenngröße K1, die Fahraktivität, zugeordnet. Die Kenngröße K1 kann einen Betrag zwischen 1 und 5 annehmen. Ein geringer Wert bedeutet eine verbrauchsoptimierte Fahrweise, ein hoher Wert bedeutet eine leistungsoptimierte Fahrweise. Die Kennlinie 26 ist hysteresebehaftet. Dadurch wird vermieden, daß bei geringen Änderungen der Eingangsgrößen die Kenngröße K1 ständig hin und her pendelt.

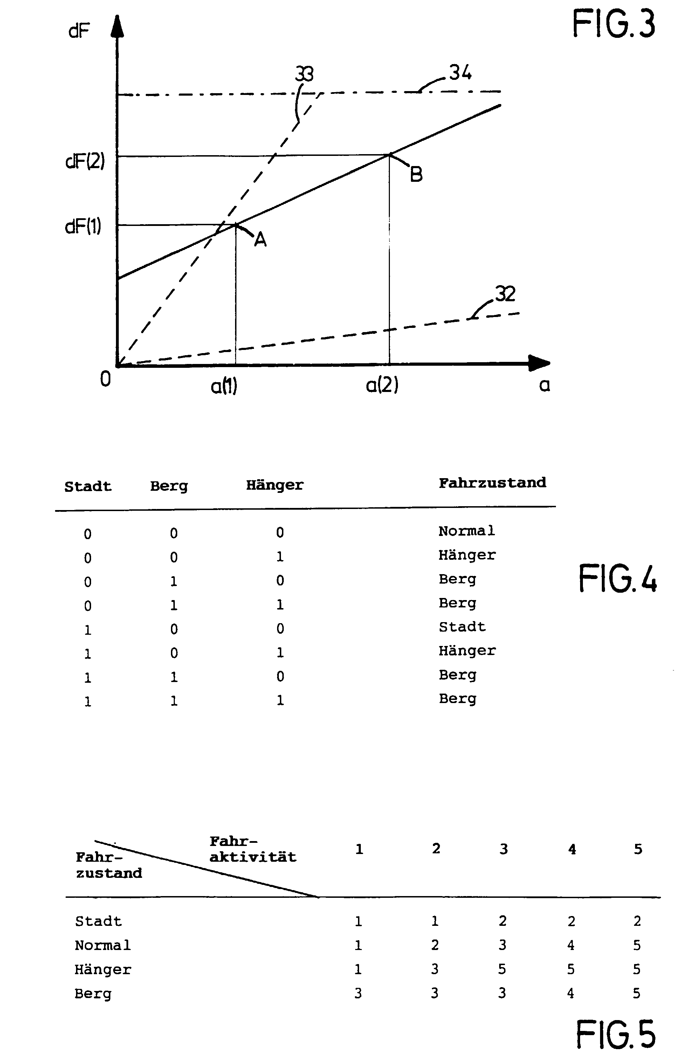

Eingangsgrößen für die zweite Kenngröße K2 sind die Fahrzustände Stadtverkehr 27, Hängerbetrieb 28 und Bergfahrt 29.
Eingangsvoraussetzung für den Fahrzustand Stadtverkehr 27 ist, daß die Fahrzeuggeschwindigkeit unterhalb einer allgemein gesetzlichen Geschwindigkeitsbegrenzung innerhalb geschlossener Ortschaften ist. Unterhalb dieses Geschwindigkeitsbereichs wird die Zahl der Anfahrvorgänge, der Bremsvorgänge und Lastwechsel gezählt. Ein Lastwechsel ist ein Wechsel in der Beschleunigung des Fahrzeugs von Zug nach Schub, auch umgekehrt. Überschreitet die Summe einen ersten Grenzwert, so wird der Fahrzustand Stadtverkehr gesetzt. Als Schutz gegen Überlauf wird die Summe mit einem festen Zeittakt verringert. Dies geschieht z. B. dadurch, daß ein fester Betrag subtrahiert wird oder indem der Zählerinhalt mit einem Faktor < 1 multipliziert wird. Der Fahrzustand Stadtverkehr 27 wird zurückgesetzt, sobald die Summe einen zweiten Grenzwert unterschreitet. Die Fahrzustände Hängerbetrieb 28 und Bergfahrt 29 werden im Zusammenhang mit Fig. 3 erklärt.

Die drei Fahrzustände 27 bis 29 sind Eingangsgrößen einer Bewertungstabelle 30. Über die Bewertungstabelle 30 werden die Eingangsgrößen logisch miteinander verknüpft. Aus den drei Fahrzuständen 27 bis 29 ergeben sich acht Eingangskombinationen für die Bewertungstabelle 30. In der Bewertungstabelle 30 sind den acht Kombinationen vier mögliche Ausgangszustände der zweiten Kenngröße K2 zugeordnet. Eine Ausführungsform der Bewertungstabelle 30 ist in Fig. 4 dargestellt.

In Fig. 3 ist ein Ausführungsbeispiel dargestellt, nach dem erhöhter Fahrwiderstand unterschieden wird in Bergfahrt und/oder Hängerbetrieb. Bei den bisher bekannten Verfahren wird lediglich erhöhter Fahrwiderstand ermittelt. Der Fahrwiderstand wird bei einem stationären Fahrzustand berechnet. Ein stationärer Fahrzustand liegt vor, wenn die Fahrzeuggeschwindigkeit größer einem Grenzwert ist, z. B. 10 km/h, die Bremse nicht betätigt ist und außerhalb von Schaltungen. Zu einem ersten Zeitpunkt tl wird eine Überschuß-Antriebskraft berechnet. Die Überschuß-Antriebskraft setzt sich zusammen aus der tatsächlichen Antriebskraft des Motors minus einer Summe aus verschiedenen Fahrwiderstandskräften auf der Ebene. Die Summe der Fahrwiderstandskräfte berechnet sich aus Getriebe-, Roll-, Luft- und Beschleunigungswiderstandskraft. Die Einzelwiderstandskräfte setzen sich zusammen aus fahrzeugspezifischen Konstanten und der Fahrzeuggeschwindigkeit 6 zum Zeitpunkt tl. Das Motormoment kann als echte Information in einem elektronischen Steuergerät 5 vorliegen, z. B. aus einer Motorsteuerung, oder es kann berechnet werden. Die Motor-Momentberechnung geschieht in bekannter Art dadurch, daß das elektronische Steuergerät 5 aus einem Motordrehzahlsignal 8 und einem zur Einspritzzeit proportionalen Signal über ein Kennfeld das Moment berechnet. Die Überschußantriebskraft zum Zeitpunkt tl ergibt den Punkt A mit den Koordinaten a (1) und dF (1). Danach wird die Überschuß-Antriebskraft zu einem zweiten Zeitpunkt t2 in gleicher Art berechnet. Dies ergibt den Punkt B mit den Koordinaten a (2) und dF (2).
Die beiden Punkte A und B werden durch eine mathematische Funktion miteinander verbunden. Dargestellt ist eine Gerade. Die Steigung der Geraden ist gleichbedeutend mit der Fahrzeugmasse. Der Ordinatenwert an der Stelle a = 0 ist gleichbedeutend mit dem Produkt aus Fahrzeugmasse mal Erdbeschleunigung mal Sinus des Fahrzeugsteigungswinkels.

Die derart gewonnenen Koeffizienten werden auf Plausibilität geprüft. Der Bereich der minimalen und maximalen Steigung der Geraden wird durch die Fahrzeugmasse festgelegt. Das Fahrzeug-Leergewicht ist die Untergrenze, unterbrochene Linie 32. Das zulässige Gesamtgewicht des Fahrzeugs plus maximal zulässiger Anhängelast bildet eine Obergrenze, unterbrochene Linie 33. Der Bereich des minimalen und maximalen Ordinatenwerts an der Stelle a = 0 wird durch die Steigleistung des Fahrzeugs festgelegt. Eine Steigung von Null oder nahezu Null Prozent bildet eine Untergrenze. Die Untergrenze wird durch die Abszisse gebildet. Eine maximal mögliche Steigleistung des Fahrzeugs bildet die Obergrenze, strichpunktierte Linie 34.

Eine Anpassung der aus der Geraden-Steigung ermittelten Masse mit der tatsächlichen Masse wird über einen Korrekturfaktor erzielt. Der Korrekturfaktor wird aus dem Vergleich zweier aufeinanderfolgender Masseberechnungen gewonnen. Dies ist zulässig, da die Massenverhältnisse sich während der Fahrt nicht ändern.
Danach wird während des Fahrbetriebs (Zündung gleich "An") nur noch die Fahrzeugsteigung geprüft.

In Fig. 5 ist ein Ausführungsbeispiel dargestellt, nach dem ein Schaltkennfeld 31 aus fünf möglichen ausgewählt wird. Eingangsgrößen sind eine erste Kenngröße K1, die Fahraktivität, und eine zweite Kenngröße K2, der Fahrzustand. Die erste Kenngröße K1 kann Werte von 1 bis 5 annehmen. Der Fahrzustand gliedert sich auf in die Fahrzustände Stadtverkehr, Normalbetrieb, Hängerbetrieb und Bergfahrt. Die den beiden Kenngrößen zugeordneten Schaltkennfelder 1 bis 5 umfassen den Bereich von verbrauchsoptimierter bis zu leistungsoptimierter Fahrweise.

### Bezugszeichen

- 1: Motor
- 2: Antriebswelle
- 3: automatisches Schaltgetriebe
- 4: hydraulisches Steuergerät
- 5: elektronisches Steuergerät
- 6: Fahrzeuggeschwindigkeitssignal
- 7: Drosselklappensignal
- 8: Motordrehzahlsignal
- 9: Motormoment
- 10: vier Raddrehzahlen
- 11: Lenkwinkel
- 12: Bremslichtsignal
- 13: Fahrpositionsschalter
- 14: Digitalfilter
- 15: Digitalfilter
- 16: Digitalfilter
- 17: Digitalfilter
- 18: Summierer
- 19: Kennfeld
- 20: Kennfeld
- 21: Kennfeld
- 22: Kennfeld
- 23: Kennfeld
- 24: Funktionsblock
- 25: Gesamt-Filter
- 26: Kennfeld
- 27: Stadtverkehr
- 28: Hängerbetrieb
- 29: Bergfahrt
- 30: Bewertungstabelle
- 31: Schaltkennfeld
- 32: Untergrenze, Fahrzeugleergewicht
- 33: Obergrenze,
zulässiges Gesamtgewicht + maximal zulässige Anhängelast
- 34: maximal mögliche Steigleistung

- K1: erste Kenngröße, Fahraktivität
- K2: zweite Kenngröße, Fahrzustand

## Patentansprüche

1. Verfahren zur Steuerung eines automatischen Schaltgetriebes (3) mit Kupplungen, die durch ein elektronisches Steuergerät (5) gesteuert oder geregelt werden, das elektronische Steuergerät (5) Sensorsignale (6 bis 13) erhält, aus den Sensorsignalen (6 bis 13) eine erste Kenngröße (K1) für eine Fahraktivität und eine zweite Kenngröße (K2) für einen Fahrzustand bestimmt, die erste Kenngröße (K1) aus den gewichteten Größen Wählhebelaktivität, Motor-Momentüberschuß, Kurvenradius und Bremsaktivität gebildet wird und die zweite Kenngröße (K2) über eine Bewertungstabelle (30) aus den Fahrzuständen Stadtverkehr (27), Hängerbetrieb (28) und Bergfahrt (29) gebildet wird, dadurch **gekennzeichnet,** daß die erste Kenngröße (K1) und die zweite Kenngröße (K2) miteinander verknüpft werden, um ein Schaltprogramm aus einer Mehrzahl von möglichen Schaltprogrammen, Schaltkennfeld (31), auszuwählen, wobei die Zahl von Anfahrvorgängen, Bremsvorgängen und Lastwechsel summiert werden, die Summe periodisch durch Subtraktion eines festen Betrages verringert wird bis zu einer minimalen Untergrenze von Null oder durch Multiplikation der Summe mit einem Faktor < 1 und der Fahrzustand Stadtverkehr (28) gesetzt wird, sobald die Summe einen ersten Grenzwert überschreitet.

2. Verfahren nach Anspruch 1, dadurch **gekennzeichnet,** daß der Fahrzustand Stadtverkehr (27) zurückgesetzt wird, sobald eine Summe einen zweiten Grenzwert unterschreitet.

3. Verfahren nach Anspruch 1, dadurch **gekennzeichnet,** daß die Summierung nur unterhalb einer allgemein gesetzlichen Geschwindigkeitsbegrenzung innerhalb geschlossener Ortschaften erfolgt.

4. Verfahren nach dem Oberbegriff von Anspruch 1, dadurch **gekennzeichnet,** daß zur Unterscheidung der Fahrzustände Bergfahrt (29) und Hängerbetrieb (28) zwei Bereiche vorgesehen sind.

5. Verfahren nach Anspruch 4, dadurch **gekennzeichnet,** daß die Untergrenze (32) des ersten Bereichs durch das Fahrzeug-Leergewicht gebildet wird und die Obergrenze (33) durch das zulässige Gesamtgewicht des Fahrzeugs plus maximal zulässiger Anhängelast.

6. Verfahren nach Anspruch 4, dadurch **gekennzeichnet,** daß die Untergrenze des zweiten Bereichs durch eine Steigung von Null oder nahezu Null Prozent gebildet wird und die Obergrenze (34) durch die maximal mögliche Steigleistung des Fahrzeugs.

7. Verfahren nach Anspruch 4, dadurch **gekennzeichnet,** daß im stationären Zustand zum Zeitpunkt tl ein erster Wert und zum Zeitpunkt t2 ein zweiter Wert einer Überschuß-Antriebskraft ermittelt wird.

8. Verfahren nach Anspruch 7, dadurch **gekennzeichnet,** daß die Überschuß-Antriebskraft berechnet wird aus einer Differenz momentaner Antriebskraft des Motors minus einer Summe der Fahrwiderstandskräfte auf der Ebene, gebildet aus Getriebe-, Roll-, Luft- und Beschleunigungswiderstandskraft.

9. Verfahren nach Anspruch 7, dadurch **gekennzeichnet,** daß der Wert der Überschuß-Antriebskraft demjenigen Bereich zugeordnet wird, in dessen betragsmäßigen Grenzen er liegt.

10. Verfahren nach Anspruch 7, dadurch **gekennzeichnet,** daß eine Gerade beide Werte der Überschuß-Antriebskraft miteinander verbindet.

11. Verfahren nach Anspruch 10, dadurch **gekennzeichnet,** daß anhand der Koeffizienten der Geraden ein bestimmter Fahrzustand identifiziert wird.

## Claims

1. Process for controlling an automatic gearbox (3) with clutches, which are controlled or adjusted by an electronic control device (5), the electronic control device (5) receives sensor signals (6 to 13), determines from the sensor signals (6 to 13) a first parameter (K1) for a driving activity and a second parameter (K2) for a driving state, the first parameter (K1) is formed from the weighted values selector lever activity, engine excess torque, curve radius and brake activity and the second parameter (K2) is formed via an evaluation table from the driving states city traffic (27), trailing (28) and mountain driving (29), characterized in that the first parameter (K1) and the second parameter (K2) are linked to one another to select a gear shift programme, a shift characteristic field (31), from a plurality of possible gear shift programmes, the number of starting operations, braking operations and load changes being added, the sum being decreased periodically by subtraction of a fixed amount down to a minimum lower limit of zero or by multiplication of the sum by a factor < 1 and the driving state city traffic (27) being set as soon as the sum exceeds a first limit value.

2. Process according to claim 1, characterized in that the driving state city traffic (27) is reset as soon as a sum falls below a second limit value.

3. Process according to claim 1, characterized in that the addition is only performed below a generally legal speed limit within built-up areas.

4. Process according to the preamble of claim 1, characterized in that to differentiate between the driving states mountair. driving (29) and trailing (28) two ranges are provided.

5. Process according to claim 4, characterized in that the lower limit (32) of the first range is formed by the empty vehicle weight and the upper limit (33) by the permitted total weight of the vehicle plus the maximum permitted trailing load.

6. Process according to claim 4, characterized in that the lower limit of the second range is formed by a gradient of zero or virtually zero percent and the upper limit by the maximum possible climbing power of the vehicle.

7. Process according to claim 4, characterized in that in the stationary state a first value of an excess driving power is ascertained at time tl and a second value of an excess driving power is ascertained at time t2.

8. Process according to claim 7, characterized in that the excess driving power is calculated from a difference of momentary driving power of the engine minus a sum of the travelling resistance forces on the level, formed from gearbox, rolling, air and acceleration resistance force.

9. Process according to claim 7, characterized in that the value of the excess driving power is assigned to the range within the limits of which it lies amount-wise.

10. Process according to claim 7, characterized in that a straight line connects both values of the excess driving power.

11. Process according to claim 10, characterized in that a certain driving state is identified on the basis of the coefficients of the straight line.

## Revendications

1. Procédé de commande d'une boîte de vitesses automatique (3) comportant des embrayages qui sont commandés ou régulés au moyen d'un appareil de commande électronique (5), cet appareil de commande électronique (5) recevant des signaux (6 à 13) en provenance de capteurs et déterminant, à partir de ces signaux (6 à 13) de capteurs une première grandeur (K1) définissant une activité de marche et une deuxième grandeur (K2) définissant un état de marche, la première grandeur (K1) étant déduite des mesures correspondant à l'activité du levier de sélection des vitesses, du transfert de moment du moteur, du rayon de courbure des virages et de l'activité de freinage, et la deuxième grandeur (K2) étant déterminée au moyen d'un tableau de référence (30) à partir des états de marche correspondant à la marche urbaine (27), à la marche avec une remorque (28) et à la marche en montagne (29), **caractérisé** en ce que la première grandeur (K1) et la deuxième grandeur (K2) sont liées entre elles, pour sélectionner un programme de changement de vitesses parmi une pluralité de programmes de changements de vitesses possibles, constituant le champ connu des changements de vitesses (31) dont les nombres de processus de démarrage, de processus de freinage et des changements de charge sont additionnés, cette somme étant périodiquement minorée par soustraction d'un montant fixe jusqu'à une limite inférieure égale à zéro ou par multiplication de la somme par un facteur <1, et l'état de marche correspondant à la marche en ville (27) étant enclenché, dès que la somme dépasse une première valeur limite.

2. Procédé selon la revendication 1, **caractérisé** en ce que l'état de marche correspondant à la marche en ville (27) est enclenché dès que la somme descend en dessous d'une deuxième valeur limite.

3. Procédé selon la revendication 1, **caractérisé** en ce que la sommation n'est effectuée que lorsqu'une limitation de vitesse générale est légalement imposée à l'intérieur d'une enceinte urbaine fermée.

4. Procédé selon le préambule de la revendication 1, **caractérisé** en ce que, pour différencier l'état de marche correspondant à la marche en montagne (29) et celui correspondant au remorquage (28), deux secteurs sont prévus.

5. Procédé selon la revendication 4, **caractérisé** en ce que la limite inférieure (32) du premier secteur est définie par la valeur du poids du véhicule à vide, et la limite supérieure (33) est définie par la valeur totale du poids maximal autorisé du véhicule et du poids maximal autorisé de la remorque.

6. Procédé selon la revendication 4, **caractérisé** en ce que la limite inférieure du deuxième secteur est définie par une progression de zéro ou approximativement zéro pour-cent, et la limite supérieure (34) par la capacité de montée maximale du véhicule.

7. Procédé selon la revendication 4, **caractérisé** en ce qu'à l'état stationnaire, une première valeur d'une réserve de la puissance d'entraînement est acquise au moment t1 et qu'une seconde valeur d'une réserve de la puissance d'entraînement est acquise au moment t2.

8. Procédé selon la revendication 7, **caractérisé** en ce que la réserve de la puissance d'entraînement est calculée sur la base d'une différence momentanée de la puissance d'entraînement momentanée du moteur, mois une somme des forces de résistance à l'avancement du véhicule à plat, constituée des résistances de la boîte de vitesses, des roues, de l'air et à l'accélération.

9. Procédé selon la revendication 7, **caractérisé** en ce que la valeur de la réserve de la puissance d'entraînement est attribuée au secteur correspondant aux limites dans lesquelles elle se situe.

10. Procédé selon la revendication 7, **caractérisé** en ce qu'une droite relie les deux valeurs de réserve de la puissance d'entraînement.

11. Procédé selon la revendication 10, **caractérisé** en ce que l'on peut identifier un état de marche déterminé en fonction des pentes des droites.
